(19) Europäisches Patentamt
European Patent Office
Office européen des brevets

(11) **EP 0 749 860 B1**

(12) **FASCICULE DE BREVET EUROPEEN**

(45) Date de publication et mention
de la délivrance du brevet:
**25.08.1999 Bulletin 1999/34**

(51) Int. Cl.⁶: **B60K 15/077**

(21) Numéro de dépôt: 96401333.8

(22) Date de dépôt: 19.06.1996

(54) **Dispositif de puisage perfectionné pour carburant dans un réservoir de véhicule automobile**

Verbesserte Kraftstoffzufuhr-Einrichtung in einem Fahrzeugtank

Improved fuel feed arrangement in vehicle fuel tank

(84) Etats contractants désignés:
**DE ES FR GB IT**

(30) Priorité: **19.06.1995 FR 9507288**

(43) Date de publication de la demande:
**27.12.1996 Bulletin 1996/52**

(73) Titulaire: **MARWAL SYSTEMS**
**F-92000 Nanterre (FR)**

(72) Inventeur: **Sertier, Bruno**
**51000 Chalons sur Marne (FR)**

(74) Mandataire:
**Texier, Christian et al**
**Cabinet Regimbeau,**
**26, Avenue Kléber**
**75116 Paris (FR)**

(56) Documents cités:
**BE-A- 427 044          DE-A- 2 442 152**
**FR-A- 2 667 583         FR-A- 2 679 840**
**FR-A- 2 711 338         US-A- 3 021 855**
**US-A- 5 236 000**

• **PATENT ABSTRACTS OF JAPAN vol. 12, no. 332**
**(M-738) [3179] , 8 Septembre 1988 & JP-A-63**
**093626 (DAIHATSU MOTOR CO. LTD.), 23 Avril**
**1988,**

**Description**

La présente invention concerne le domaine des réservoirs de carburant pour véhicules automobiles.

Plus précisément la présente invention concerne le domaine des dispositifs de puisage pour carburant dans un réservoir multipoches de véhicules automobiles.

De nombreuses configurations de réservoir et de nombreux dispositifs de puisage de carburant ont déjà été proposés.

Cependant, ces systèmes ne donnent pas tous satisfaction.

En particulier, de nos jours, les constructeurs automobiles souhaitent disposer de plus en plus fréquemment de réservoirs à plusieurs poches, pour tenir compte des contraintes d'implantation sur véhicules automobiles, tout en disposant d'un volume maximal. Ainsi, on développe de plus en plus des réservoirs comprenant deux poches situées par exemple de part et d'autre d'une ligne d'échappement ou d'un autre élément du véhicule et reliés à leur partie supérieure.

De tels réservoirs exigent des systèmes de transfert de carburant entre les différentes poches qui tendent à compliquer singulièrement les dispositifs de puisage.

Par exemple, de façon courante, les versions essence sont équipées d'un système de transfert de carburant entre poches, alimenté par une pompe spécifique, le plus souvent type pompe à jet, installée dans la poche opposée au puisage principal pour l'alimentation moteur.

Dans le cas des versions diesel, la situation est souvent plus délicate. Le coût d'une pompe électrique spécifique pour transfert entre poches est généralement prohibitif. De plus, le fonctionnement d'une pompe à jet est inhibé par fermeture de la valve thermostatée prévue sur le circuit retour, lorsque la température retour du carburant est inférieure à un seuil. Enfin, l'utilisation d'une pompe à jet efficace alimentée par le retour moteur génère fréquemment des contre-pressions en amont de la buse d'injection, incompatibles avec les tolérances des éléments du circuit retour.

La présente invention a maintenant pour but de perfectionner les dispositifs de puisage de carburant connus.

Ce but est atteint selon la présente invention grâce à un dispositif de puisage de carburant pour réservoir de véhicules automobiles comprenant les caractéristiques définies en revendication 1 annexée.

D'autres caractéristiques, buts et avantages de la présente invention apparaîtront à la lecture de la description détaillée qui va suivre, et en regard des dessins annexés donnés à titre d'exemple non limitatif et sur lesquels :

- la figure 1 représente une vue schématique en coupe verticale d'un exemple de réalisation de réservoir de carburant pour véhicule automobile conforme à la présente invention,
- la figure 2 représente une vue à échelle agrandie d'un ensemble de clapet à flotteur conforme à la présente invention, en position ouverte,
- la figure 3 représente une vue similaire du même ensemble de clapet à flotteur en position fermée de celui-ci.

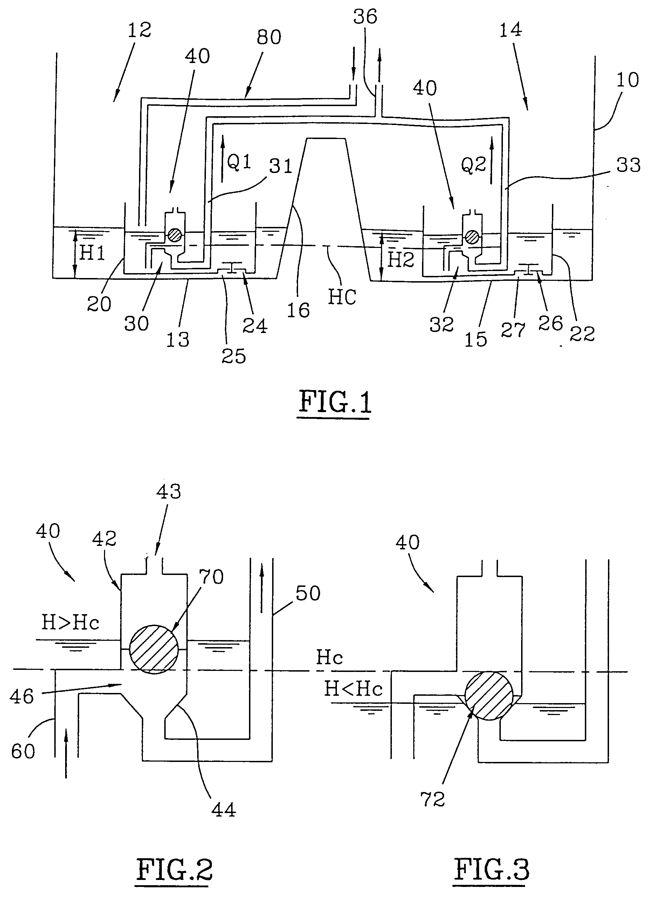

Le réservoir multipoches de carburant partiellement représenté sur la figure 1 porte la référence 10.

Il s'agit en l'espèce, mais cet exemple ne doit pas être considéré comme limitatif, d'un réservoir 10 comprenant deux poches 12, 14. Les poches 12 et 14 représentées sur la figure 1 sont symétriques par rapport à un plan médian vertical. Cette caractéristique n'est cependant pas indispensable.

En pratique, les deux poches 12, 14 peuvent être de géométrie, volume et hauteur différents. Les fonds 13, 15 des poches 12, 14 peuvent également être situés à des hauteurs différentes.

Les deux poches 12, 14 sont séparées à leur base par un carter 16. Celui-ci enjambe par exemple un essieu du véhicule ou un autre élément.

De préférence, les deux poches 12, 14 sont cependant reliées à leur partie supérieure, c'est-à-dire au-dessus du carter 16.

De préférence, chaque poche 12, 14 est munie d'un bol de réserve 20, 22. Les bols de réserve 20, 22 sont fixés sur le fond 13, 15 des poches 12, 14 ou sont indexés sur ceux-ci.

La présence des bols de réserve 20, 22 demeure optionnelle.

Le cas échéant, l'un au moins des deux bols 20, 22 peut être supprimé.

Selon le mode de réalisation représenté sur la figure 1, un point de puisage 30, 32 est prévu respectivement dans chacune des poches 12, 14, plus précisément respectivement dans chacun des bols de réserve 20, 22.

Comme on l'a indiqué précédemment, chacun des points de puisage 30, 32 est équipé d'un système de clapet à flotteur 40.

De préférence, les deux systèmes de clapets à flotteur 40 sont de structure identique.

Ces ensembles 40 de clapet à flotteur ont pour fonction d'obturer le point de puisage 30, 32 lorsque le carburant autour de ce point de puisage, c'est-à-dire dans le bol de réserve 20, 22 considéré tombe sous un seuil donné.

Sur les figures annexées, ce seuil est référencé Hc.

Les sorties des ensembles de clapet à flotteur 30, 32 sont reliées, par l'intermédiaire de conduits parallèles respectifs 31, 33 situés dans chacune des poches, à une conduite commune 36 qui débouche dans une ligne d'aspiration. Plus précisément, les conduits 31, 33 débouchent dans un point commun de la conduite 36.

On va maintenant préciser la structure des ensembles de clapet à flotteur 40 en regard des figures 2 et 3.

Comme on le voit sur ces figures, chaque système 40 de clapet à flotteur comprend une cage 42 définissant un siège 44, un tuyau d'aspiration 50, un tuyau de puisage 60 et un flotteur 70.

De préférence, la cage 42 est une cage cylindrique centrée sur un axe vertical.

Le siège d'étanchéité 44 est placé à la partie inférieure de la cage 42. Il débouche sur la ligne d'aspiration 50, laquelle constitue la sortie reliée à un conduit 31 ou 33 du système.

De préférence, le siège 44 est de forme conique. Son diamètre inférieur est inférieur au diamètre du clapet flotteur 70 tandis que son diamètre supérieur est supérieur au diamètre de ce clapet flotteur 70. Ainsi, comme on le voit sur la figure 3, lorsque le clapet flotteur 70 repose sur le siège 44, il est défini entre le siège 44 et le clapet 70, une chambre annulaire apte à retenir du carburant par capillarité pour former ainsi un joint liquide entre le siège 44 et le clapet flotteur 70.

De préférence, la cage 42 est munie d'un évent 43 à sa partie supérieure. L'évent 43 a pour fonction d'assurer un équilibre entre la pression interne à la cage 42 et la pression régnant dans la partie supérieure du réservoir 10.

La cage 42 est également munie d'un orifice d'admission 46 dans sa paroi latérale. L'admission 46 communique avec le tuyau de puisage 60.

L'orifice d'admission 46 est situé au-dessus du plan d'appui du clapet flotteur 70 sur le siège d'étanchéité 44.

Comme on le voit sur les figures 2 et 3, le tuyau d'aspiration 50 aboutit sous le siège 44 de la cage 42.

Par ailleurs, comme on le voit sur les figures 2 et 3, le tuyau de puisage 60 qui communique avec l'orifice d'admission 46 est de préférence coudé vers le bas de sorte que son entrée soit située à proximité du fond du bol de réserve respectif 20, 22.

Le clapet flotteur 70 situé dans la cage 42 et destiné à coopérer avec le siège 44 est de préférence formé d'une bille sphérique. Cependant, en variante, d'autres géométries de clapets flotteur 70 peuvent être retenues.

Le clapet flotteur 70 est réalisé en un matériau présentant une densité au moins légèrement inférieure à celle du carburant.

Le cas échéant, le clapet flotteur 70 peut être muni sur sa surface extérieure d'un matériau élastique afin d'assurer un bon niveau d'étanchéité sur le siège 44.

Comme on le voit sur la figure 1, un conduit de retour 80 recevant le carburant non utilisé par le moteur peut déboucher au-dessus de l'un des bols de réserve 20, 22.

De préférence, les bols de réserve 20, 22 sont équipés de clapets anti-vidange 24, 26 associés à des pré-filtres 25, 27. Les clapets anti-vidange 24, 26 sont adaptés pour autoriser un transfert de carburant du volume général du réservoir 10 vers l'intérieur des bols de réserve 20, 22 lorsque le niveau du carburant à l'intérieur du réservoir 10 est supérieur au niveau du carburant dans le bol de réserve 20, 22. C'est ce qui peut se produire par exemple lors du remplissage du réservoir 10. En revanche, les clapets anti-vidange 24, 26 sont adaptés pour interdire un transfert de carburant de l'intérieur des bols de réserve 20, 22 vers l'extérieur.

On a représenté sur la figure 1, une disposition de réservoir telle que les fonds 13, 15 des deux poches 12, 14 sont situés à même hauteur. De même, les deux sièges 44 des systèmes prévus dans ces poches sont situés à hauteur identique. Cependant, cette disposition n'est pas nécessaire. Il suffit de préférence que les deux sièges 44 soient situés à la même hauteur par rapport à leur fond respectif 13, 15.

Le fonctionnement du système conforme à la présente invention est essentiellement le suivant.

Lorsque la hauteur de carburant dans une poche 12, 14 est suffisante, c'est-à-dire supérieure au seuil critique Hc, le clapet flotteur 70 libère le siège 44 et permet au carburant d'être aspiré à travers la cage 42 en direction de la ligne d'aspiration 36.

Lorsque le niveau de carburant diminue, il apparaît une hauteur critique Hc en deçà de laquelle le clapet 70 obture le siège 44, garantissant un joint liquide, référencé 72 sur la figure 3, autour du clapet 70. Ce joint liquide 72 interdit toute aspiration d'air qui risquerait de désamorcer le circuit d'alimentation.

Sur la figure 1, on a référencé H1 le niveau de carburant dans la poche 12 recevant le conduit de retour 80, et on a référencé H2 le niveau de carburant dans la seconde poche 14.

Le fonctionnement du système peut être précisé en considérant quatre cas.

Dans le premier cas, le niveau de carburant H1 dans la poche 12 est supérieur au seuil Hc et de même le niveau de carburant H2 dans la seconde poche 14 est supérieur au seuil Hc. Dans ce cas, le puisage peut être réalisé dans les deux poches. Le débit puisé dans chacune des deux poches 12, 14 dépend à la fois du niveau de carburant dans chacune des poches et des pertes de charges entre les entrées et les sorties des conduits d'aspiration.

A perte de charge identique dans les deux conduits d'aspiration, c'est-à-dire entre les entrées des conduits 60 et les points communs dans la ligne d'aspiration 36, le puisage se fait de façon privilégiée dans la poche 12, 14 présentant le niveau de carburant le plus élevé.

La hauteur dans cette poche tendant à diminuer jusqu'à équilibre, ce qui équilibre les débits puisés dans chacune des deux poches ainsi que l'écart entre le niveau de carburant dans celles-ci.

Dans un second cas, le niveau H1 de carburant dans la poche 12 est supérieur au seuil Hc, tandis que le niveau de carburant H2 dans la seconde poche 14 est identique au seuil Hc.

Dans ce cas, le puisage n'est possible que dans la première poche 12. Le clapet 70 repose sur le siège 44 et ferme le système 40 correspondant dans la poche 14. Le débit issu de la ligne d'aspiration 36 est par conséquent égal au débit puisé dans la poche 12. Le niveau dans celle-ci diminue jusqu'à atteindre H1=Hc .

Dans un troisième cas, le niveau de carburant H1 dans la première poche 12 est égal au seuil Hc tandis que le niveau de carburant H2 dans la seconde poche 14 est supérieur au seuil Hc. Dans ce cas, le puisage n'est possible que dans la seconde poche 14, le clapet 70 reposant sur le siège 44 dans la première poche 12. Le débit de carburant issu de la ligne d'aspiration 36 est alors identique au débit de carburant aspiré dans la seconde poche 14. Le niveau dans celle-ci diminue jusqu'à obtenir H2=Hc . En réalité, cependant, si le débit dans le conduit de retour 80 n'est pas nul, le clapet 70 situé dans la première poche 12 doit s'ouvrir pour conduire à une augmentation du niveau H1.

Dans un quatrième cas, les niveaux H1 et H2 de carburant dans les deux poches 12 et 14 sont égaux au seuil Hc. Dans ce cas l'aspiration de carburant est impossible des deux côtés.

Il faut noter que ce cas peut se rencontrer en cas de mouvement de vague en fin de vidange du réservoir, par exemple au cours d'une accélération ou d'un ralentissement du véhicule, bien qu'il reste du carburant à puiser en quantité importante. Néanmoins, l'utilisation d'un bol 20, 22 de réserve (ou de piégeage du carburant) limite ou tout du moins retarde les risques de démorçage du circuit d'alimentation dans ce cas.

L'homme de l'art comprendra à la lecture de la description qui précède que l'architecture de puisage préconisée dans le cadre de la présente invention, présente la caractéristique d'une symétrie dans le mode de puisage et dans les performances d'aspiration des deux poches 12, 14. Cette architecture est basée sur l'utilisation de deux ensembles de clapet à flotteur 40 dont la fonction principale est de permettre le passage de carburant et d'interdire l'introduction d'air dans le circuit d'aspiration.

Comme suggéré précédemment, de préférence, dans le cadre de la présente invention, les conduits entre les entrées des ensembles à clapet flotteur 40 et la ligne d'aspiration commune 36 sont adaptés pour définir des pertes de charge en ligne identiques dans les deux poches.

Le dispositif conforme à la présente invention présente l'intérêt majeur d'autoriser un puisage maximal sans risque de désarmoçage prématuré. En outre, le dispositif conforme à la présente invention offre un puisage quasi-symétrique des deux poches 12, 14 du réservoir et ne génère aucune perte de charge particulière sur la ligne de retour 80, et ne nécessite pas l'utilisation du débit retour pour assurer un transfert entre poches.

Bien entendu la présente invention n'est pas limitée au mode de réalisation particulier qui vient d'être décrit mais s'étend à toute variante conforme à son esprit.

La présente invention peut par exemple s'appliquer à des réservoirs 10 multipoches comprenant un nombre de poches supérieur à deux.

La pésente invention s'applique de préférence aux versions diesel de véhicules. Elle peut cependant s'appliquer aussi à des versions essence.

Selon une autre variante de la présente invention le dispositif comprend un nombre de points de puisage supérieur à trois.

## Revendications

1. Dispositif de puisage de carburant pour réservoir de véhicules automobiles, caractérisé par le fait que le réservoir (10) est un réservoir multipoches (12, 14) et qu'il comprend au moins deux points de puisage (30, 32) situés dans des poches distinctes, à proximité du fond du réservoir (10) et équipés chacun d'un ensemble de clapet à flotteur (40) adapté pour obturer le point de puisage lorsque le carburant autour de ce point tombe sous un seuil (Hc), chaque ensemble (40) de clapet flotteur comprenant une cage (42) munie d'un siège (44), un clapet flotteur (70) apte à reposer sur le siège (44), un tuyau d'aspiration (50) qui communique avec le siège (44) et un tuyau de puisage (46), et caractérisé par le fait que les sorties des ensembles de clapet à flotteur (40) sont reliées à une ligne d'aspiration commune (36).

2. Dispositif selon la revendication 1, caractérisé par le fait qu'il comprend deux points de puisage (30, 32) situés dans des poches respectives (12, 14) d'un réservoir (10).

3. Dispositif selon l'une des revendications 1 ou 2, caractérisé par le fait que l'un au moins des points de puisage (30, 32) est placé dans un bol de réserve (20, 22).

4. Dispositif selon l'une des revendications 1 à 3, caractérisé par le fait que le siège (44) est situé en partie inférieure de la cage (42).

5. Dispositif selon l'une des revendications 1 à 4, caractérisé par le fait que le siège (44) est généralement conique, et qu'il possède un diamètre inférieur plus petit que le diamètre du clapet flotteur (70) mais un diamètre supérieur plus grand que le diamètre de ce clapet flotteur (70) pour définir autour du clapet flotteur (70) un joint liquide résiduel à la fermeture du clapet.

6. Dispositif selon l'une des revendications 1 à 5, caractérisé par le fait que la cage (42) comprend un évent (43).

7. Dispositif selon l'une des revendications 1 à 6, caractérisé par le fait que le tuyau de puisage (60) débouche dans une ouverture d'admission (46) située au-dessus du plan d'appui du clapet flotteur (70) sur le siège (44).

8. Dispositif selon l'une des revendications 1 à 7, caractérisé par le fait que le tuyau d'aspiration (50) débouche sous le siège (44) du clapet flotteur.

9. Dispositif selon l'une des revendications 1 à 8, caractérisé par le fait que le tuyau de puisage (60) est coudé et possède son entrée située au voisinage du fond du réservoir (10).

10. Dispositif selon l'une des revendications 1 à 9, caractérisé par le fait que le clapet flotteur (70) est formé d'une bille sphérique.

11. Dispositif selon l'une des revendications 1 à 10, caractérisé par le fait que le clapet flotteur (70) est muni d'un matériau de surface élastique.

12. Dispositif selon l'une des revendications 1 à 11, caractérisé par le fait qu'il comprend un conduit de retour (80) débouchant dans un bol de réserve (20).

13. Dispositif selon l'une des revendications 1 à 12, caractérisé par le fait qu'il comprend au moins un bol de réserve (20, 22) muni d'un clapet anti-vidange (24, 26).

14. Dispositif selon l'une des revendications 1 à 13, caractérisé par le fait que deux ensembles (40) de clapets à flotteur ont leurs sièges (44) situés à une même hauteur par rapport à leurs fonds respectifs.

15. Dispositif selon l'une des revendications 1 à 14, caractérisé par le fait que les différents ensembles de clapet à flotteur (40) sont reliés à une ligne d'aspiration commune (36) par l'intermédiaire de conduits parallèles respectifs (31, 33) situés dans chacune des poches.

16. Réservoir de carburant pour véhicules automobiles équipé d'un dispositif de puisage conforme à l'une des revendications 1 à 15.

**Claims**

1. Apparatus for drawing off fuel for a motor vehicle tank, said apparatus being characterized by the facts that the tank (10) is a multiple compartment tank (12, 14), and that it is provided with at least two drawing-off points (30, 32) situated in distinct compartments, in the vicinity of the bottom of the tank (10), each of which points is equipped with a respective float valve assembly (40) organized to close the drawing-off point when the fuel around said point falls below a threshold (Hc), each float valve assembly (40) comprising a chamber (42) provided with a seat (44), a float valve member (70) suitable for resting on the seat (44), a suction tube (50) which communicates with the seat (44), and a drawing-off tube (46), and being characterized by the fact that the outlets of the float valve assemblies (40) are connected to a common suction line (36).

2. Apparatus according to claim 1, characterized by the fact that it is provided with two drawing-off points (30, 32) situated in respective compartments (12, 14) of a tank (10).

3. Apparatus according to claim 1 or 2, characterized by the fact that at least one of the drawing-off points (30, 32) is placed in a reserve bowl (20, 22).

4. Apparatus according to any one of claims 1 to 3, characterized by the fact that the seat (44) is situated at the bottom of the chamber (42).

5. Apparatus according to any one of claims 1 to 4, characterized by the facts that the seat (44) is generally conical, and that it has a small diameter that is smaller than the diameter of the float valve member (70), while its large diameter is larger than the diameter of said float valve member (70), so as to define a residual liquid seal around the float valve member (70) when said valve member is closed.

6. Apparatus according to any one of claims 1 to 5, characterized by the fact that the chamber (42) is provided with a vent (43).

7. Apparatus according to any one of claims 1 to 6, characterized by the fact that the drawing-off tube (60) opens out into an intake opening (46) situated above the plane in which the float valve member (70) abuts against the seat (44).

8. Apparatus according to any one of claims 1 to 7, characterized by the fact that the suction tube (50) opens out under the seat (44) of the float valve member.

9. Apparatus according to any one of claims 1 to 8, characterized by the fact that the drawing-off tube (60) is provided with a bend and has its inlet situated in the vicinity of the bottom of the tank (10).

10. Apparatus according to any one of claims 1 to 9, characterized by the fact that the float valve member (70) is formed by a spherical ball.

11. Apparatus according to any one of claims 1 to 10, characterized by the fact that the float valve member (70) is provided with a resilient surface material.

12. Apparatus according to any one of claims 1 to 11, characterized by the fact that it is provided with a return pipe (80) opening out into a reserve bowl (20).

13. Apparatus according to any one of claims 1 to 12, characterized by the fact that it is provided with at least one reserve bowl (20, 22) provided with an anti-emptying valve member (24, 26).

14. Apparatus according to any one of claims 1 to 13, characterized by the fact that two float valve assemblies (40) have their seats (44) situated at the same height relative to their respective bottoms.

15. Apparatus according to any one of claims 1 to 14, characterized by the fact that the various float valve assemblies (40) are connected to a common suction line (36) via respective parallel pipes (31, 33) situated in respective ones of the compartments.

16. A motor vehicle fuel tank equipped with drawing-off apparatus according to any one of claims 1 to 15.

**Patentansprüche**

1. Kraftstoffzufuhrvorrichtung für Kraftfahrzeugtanks, dadurch gekennzeichnet, daß der Tank (10) ein Mehrkammertank (12, 14) ist, und daß er wenigstens zwei Zapfstellen (30, 32) aufweist, welche in unterschiedlichen Kammern in der Nähe des Bodens des Tanks (10) angeordnet und jeweils mit einer Schwimmerklappeneinheit (40) ausgestattet sind, welche dafür eingerichtet ist, die Zapfstelle zu verschließen, wenn der Kraftstoff um diese Stelle herum unter einen Schwellenwert (Hc) sinkt, wobei jede Schwimmerklappeneinheit (40) ein mit einem Sitz (44) ausgestattetes Behältnis (42), eine Schwimmerklappe (70), welche dafür geeignet ist, auf dem Sitz (44) zu ruhen, ein Ausaugrohr (50), welches mit dem Sitz (44) verbunden ist, und ein Zapfrohr (46) aufweist, und dadurch gekennzeichnet, daß die Ausgange der Schwimmerklappeneinheiten (40) mit einer gemeinsamen Ansaugleitung (36) verbunden sind.

2. Vorrichtung gemäß Anspruch 1, dadurch gekennzeichnet, daß sie zwei Zapfstellen (30, 32) aufweist, welche in jeweiligen Kammern (12, 14) eines Tanks (10) angeordnet sind.

3. Vorrichtung gemäß einem der Ansprüche 1 oder 2, dadurch gekennzeichnet, daß wenigstens eine der Zapfstellen (30, 32) in einem Reservebehälter (20, 22) angeordnet ist.

4. Vorrichtung gemäß einem der Ansprüche 1 bis 3, dadurch gekennzeichnet, daß der Sitz (44) in dem unteren Bereich des Behältnisses (42) angeordnet ist.

5. Vorrichtung gemäß einem der Ansprüche 1 bis 4, dadurch gekennzeichnet, daß der Sitz (44) allgemein konisch ist, und daß er einen kleineren unteren Durchmesser als der Durchmesser der Schwimmerklappe (70), aber einen größeren oberen Durchmesser als der Durchmesser dieser Schwimmerklappe (70) aufweist, um um die Schwimmerklappe (70) herum eine flüssige Rückstandsdichtung bei Schließung der Klappe zu definieren.

6. Vorrichtung gemäß einem der Ansprüche 1 bis 5, dadurch gekennzeichnet, daß das Behaltnis (42) ein Lüftungsloch (43) aufweist.

7. Vorrichtung gemäß einem der Ansprüche 1 bis 6, dadurch gekennzeichnet, daß das Zapfrohr (60) in eine Einlaßöffnung (46) mündet, welche oberhalb der Auflageebene der Schwimmerklappe (70) auf dem Sitz (44) angeordnet ist.

8. Vorrichtung gemäß einem der Ansprüche 1 bis 7, dadurch gekennzeichnet, daß das Ansaugrohr (50) unter den Sitz (44) der Schwimmerklappe mündet.

9. Vorrichtung gemäß einem der Ansprüche 1 bis 8, dadurch gekennzeichnet, daß das Zapfrohr (60) abgewinkelt und sein Einlaß in Nähe zu dem Boden des Tanks (10) angeordnet ist.

10. Vorrichtung gemäß einem der Ansprüche 1 bis 9, dadurch gekennzeichnet, daß die Schwimmerklappe (70) von einer runden kleinen Kugel gebildet ist.

11. Vorrichtung gemäß einem der Ansprüche 1 bis 10, dadurch gekennzeichnet, daß die Schwimmerklappe (70) mit einem elastischen Oberflächenmaterial ausgestattet ist.

12. Vorrichtung gemäß einem der Ansprüche 1 bis 11, dadurch gekennzeichnet, daß sie eine Rückleitung (80) aufweist, welche in einen Reservebehälter (20) mündet.

13. Vorrichtung gemäß einem der Ansprüche 1 bis 12, dadurch gekennzeichnet, daß sie wenigstens einen Reservebehälter (20, 22) aufweist, welcher mit einer Entleerungsschutzklappe (24, 26) ausgestattet ist.

14. Vorrichtung gemäß einem der Ansprüche 1 bis 13, dadurch gekennzeichnet, daß die beiden Schwimmerklappeneinheiten (40) ihre Sitze (44) auf einer gleichen Höhe bezüglich ihrer jeweiligen Böden angeordnet haben.

15. Vorrichtung gemäß einem der Ansprüche 1 bis 14, dadurch gekennzeichnet, daß die verschiedenen Schwimmerklappeneinheiten (40) mit einer gemeinsamen Ansaugleitung (36) mittels jeweiliger paralleler Leitungen (31, 33), welche in jeder der Kammern angeordnet sind, verbunden sind.

16. Kraftstofftank für Kraftfahrzeuge, welcher mit einer Zufuhrvorrichtung gemäß einem der Ansprüche 1 bis 15 ausgestattet ist.

FIG.1

FIG.2

FIG.3